# EUROPEAN PATENT SPECIFICATION

(11) **EP 3 453 004 B1**
(45) Date of publication and mention of the grant of the patent: **08.12.2021**
(21) Application number: 18713163.6
(22) Date of filing: 16.03.2018
(51) Int. Cl.: G08C 17/02, G01D 11/24, G01N 35/00

(54) **SELF-STANDING MOBILE DETECTION DEVICE, RELATED SYSTEM AND PROCESS FOR THE DETECTION AND THE MONITORING OF CHEMICAL-PHYSICAL PARAMETERS INSIDE A CONTAINER FOR THE STORAGE AND/OR THE TRANSPORTATION OF SOLID MATERIAL**
EIGENSTÄNDIGE MOBILE DETEKTIONSVORRICHTUNG, ZUGEHÖRIGES SYSTEM UND VERFAHREN ZUR DETEKTION UND ÜBERWACHUNG CHEMISCH-PHYSIKALISCHER PARAMETER IM INNERN EINES BEHÄLTERS FÜR DIE LAGERUNG UND/ODER DEN TRANSPORT VON FESTSTOFFEN
DISPOSITIF DE DÉTECTION MOBILE AUTONOME, SYSTÈME ET PROCESSUS ASSOCIÉS POUR LA DÉTECTION ET LA SURVEILLANCE DE PARAMÈTRES CHIMIQUES-PHYSIQUES À L'INTÉRIEUR D'UN CONTENEUR POUR LE STOCKAGE ET/OU LE TRANSPORT DE MATÉRIAU SOLIDE

(30) Priority: 17.03.2017 IT 201700030049
(43) Date of publication of application: 13.03.2019
(73) Proprietor: Open Fields S.R.L., 43052 Colorno (PR) (IT)
(72) Inventor: RANIERI, Roberto, 43052 Colorno (PR) (IT)
(74) Representative: Roos, Rikard
(86) International application number: PCT/EP2018/056634
(87) International publication number: WO 2018/167258

(56) References cited:
- EP-A1- 1 108 207
- EP-A1- 2 963 413
- EP-A2- 0 853 497
- WO-A1-2015/142289
- US-A1- 2001 029 996
- US-A1- 2006 004 484
- US-A1- 2008 300 712
- US-A1- 2009 191 092
- US-A1- 2016 258 977
- US-A1- 2016 379 024
- Sureshraja (or Initial) Neethirajan ET AL: "Sensors for Grain Storage", 2007 Minneapolis, Minnesota, June 17-20, 2007, 1 January 2007 (2007-01-01), XP055623431, St. Joseph, MI DOI: 10.13031/2013.23510
- Anonymous: "CES 2017 Conference Registration is Now Open", , 19 October 2016 (2016-10-19), XP055625229, Retrieved from the Internet: URL:https://www.ces.tech/News/Press-Releas es/CES-Press-Release.aspx?NodeID=2e17f33c- 8192-429f-9d50-2631a575749b [retrieved on 2019-09-23]
- Chris Velazco: "Amber's sensors aim to save farmers' grain from spoilage Yes, farm tech is a thing at CES", , 6 January 2017 (2017-01-06), XP055625232, Retrieved from the Internet: URL:https://www.engadget.com/2017/01/06/am bers-sensors-aim-to-save-farmers-grain-fro m-spoilage/ [retrieved on 2019-09-23]

## Description

### Field of Application

The present invention refers to a self-standing mobile detection device comprising electronic components which uses known technologies for the detection of chemical-physical parameters and the wireless transmission of information.

Specifically, such self-standing mobile detection device comprises inside it both at least one detection element for the detection of chemical-physical parameters and at least a unit for wireless transmission of information, in particular for sending and receiving.

According to a further aspect, the present invention refers also to an integrated system, comprising a plurality of such detection devices and further comprising a control unit.

Moreover, the present invention envisages the finalizing of a process for the use of such detection device and/or of such system inside a container for the storage and/or the transportation of solid material in form of a powder and/or of a granular material, preferably of solid material for use in food or livestock industry.

### Prior art

It is well known that the storage of materials, in particular of raw materials, is an extremely important step within every production process: such operation, if performed in unsuitable locations or by means of unsuitable processes, can result in a decomposition of the raw materials and/or modifications of the chemical-physical properties of the latter.

The conservation of raw materials is even more important within the production processes in the context of food industry, with particular regard to the case of the production process of agricultural commodities such as, for example, grain (cereal, leguminous vegetables), dried fruit, spices and coffee.

Specifically, just upon harvest, a cereal or a grain more in general is usually transported with suitable means of transportation in storage centers where particular attention should be paid to correctly manage such raw material in order to ensure both an appropriate separation of the individual batches and the prevention of any deterioration, preserving its integrity and chemical-physical and organoleptic properties.

In fact, not only the correct conservation of raw materials in specific dedicated structures is extremely important, but it is also important to safeguard the health and the food integrity of such raw materials by way of an efficient system of tracking and detection of the potential risk factors with respect to deterioration.

Therefore, such system has to be able to register the successive handling starting from the field, through the different conservation steps, up to the final steps of transformation of the raw material. Moreover, it must allow to identify efficiently in real time the first signals of the onset of possible causes of deterioration.

In fact, in food industry, the causes of contamination (by microorganisms, insects or contaminants) of a specific food commodities can be not only a sub-optimal management of the last step of storage, within the production process, but can also be due to previous steps, such as intermediate storages and/or to the transportation and/or to sub-optimal characteristics of such raw materials when entering in the production process.

Therefore, with particular reference to the cereal industry, a correct cereal conservation, which is usually achieved in horizontal storehouses and/or vertical silos or cisterns, made of metal or concrete, is necessary in order to avoid:
- proliferation of micro-organisms, for example molds or yeasts;
- attacks by arthropoda and mammalian, for example invasive insects and/or rodents;
- deterioration due to an increase or a decrease of the temperature or of the humidity level;
- presence of residues or of phytosanitary products (insecticides or pesticides, antifungal or antibacterial agents; weed killers or others), heavy metals and mycotoxins;
- crossed contamination with products not eligible within a specific production chain, for example products which were obtained using agrochemicals and/or herbicides or genetically engineered products.

Usually, also in line with the national and EU law in force, the structures for the storage of raw materials, especially in the agricultural and food industry, are made of appropriate construction material and are arranged according to an accurate structural organization.

However, although the operators of the production chains are paying more attention and modern technologies have been provided to solve the problems listed above, nowadays there are still problems, sometimes even serious, about the conditions of storage and conservation of solid materials, in particular of raw materials, especially in the context of the food industry. Moreover, in this case, the tracking of the source and of the route of raw material used is not only essential to guarantee its healthiness and integrity, and to trace back possible problems, but also satisfies a need which is more and more felt by the consumers, which the food industries have to satisfy.

Referring to the cereal branch, the losses due to bad conservation conditions, often caused by contamination by insects, fungal agents and/or mycotoxins produced by them, are estimated to be of the order of 10-30% of the yearly produced amount, with connected and enormous economic damages.

To respond to the above-mentioned problems, various so called prevention techniques are usually utilized; these include the use of chemical agents, the refrigeration of the raw material and the conservation under inert atmosphere thereof.

Such prevention techniques against the chemical-physical alteration of raw materials, especially in the cereal industry, show problems which are in turn not to underestimate such as, for example, the residual nature (i. e. the permanence of residual amounts of chemical agents, such as pesticides, insecticides and agrochemicals) or the increase in conservation cost in the case of refrigeration and of conservation in modified atmospheres.

Therefore, in this branch of the art, the research is aiming to the arrangement of systems for monitoring the environmental conditions and the chemical-physical parameters inside the apparatuses for the storage and the transportation of solid materials, in particular raw materials, as well as for tracking the raw materials themselves, so as to optimize the control of their conservation state and/or trace back the cause of a possible anomaly and/or for tracking of the latter within the whole production process.

In this sense, is mentioned the Chinese patent application CN 105 235771 which refers to a mobile mechanical device, able to advance inside a silo filled with cereal grains, provided with at least three propellers and a sensor for the detection of parameters such as temperature and atmospheric humidity inside the silo. In particular, the device in object comprises a controller able to communicate remotely and send information to a console in wireless mode.

However, the above described device has a very complicated mode of operation, especially with respect to the movement of the same, which is possible only by means of screw propellers integrated therein.

Another attempt to solve the above-mentioned problems is exposed in patent application US 4293854 concerning a silo comprising a system of detection of physical parameters such as humidity and temperature of a solid material, in particular a bulk of cereals stored in a silo: the system is structured as a moving arm anchored to a drill. In particular, a probe is located on the bottom portion of the arm; the probe is able to analyse the solid material in correspondence of the surface of the bulk of cereals stored in the silo.

However, also the latter apparatus shows a clear operating complexity, and it presents a real obstacle to the installation thereof on means adapted for the handling of the solid material, such as motor vehicles provided with specific cisterns.

Accordingly, in the field there is particularly the need for preparing a device and/ or a process, which is innovative and alternative to the ones used and/ or applied to the conservation of solid materials, in particular raw materials, with particular reference to raw materials in the agricultural and food industry, during the storage and/ or the transportation thereof, starting from their first accumulation (for example, in case of grains, from their harvest), which solves the limits of the previously reported solutions.

The technical problem behind the present invention is thus to provide a device and a process for the detection of chemical-physical parameters inside a container for the storage and/ or the transportation of solid materials, in particular raw materials, which allows to monitor environmental conditions and chemical-physical parameters inside such container, as well as it allows at the same time a total tracking of the raw materials themselves.

### Summary of the Invention

Such technical problem is solved by a self-standing mobile detection device according to claim 1 and a system according to claim 7.

A device of the above-mentioned type, thanks to its simplicity and compactness, i. e. due to the fact that it comprises different technical units in a single matrix, allows first of all to be easily handled and, accordingly, it offers an extreme convenience in use as self-standing mobile detection device for the continuous detection over time of chemical-physical parameters (such as a property of the environment, a property of the material in which such device is dispersed or a property of the device itself, for example its geographical location or its position relative to another technical element different from it, as well as the position and the identification of the bulk of the material in which it can be dispersed) inside a container for the storage of solid materials such as solid raw materials, such as for example inside a storage silo/ storehouse or a trailer of a specific means of transportation.

In particular, according to the present invention, which is as defined in the appended claims, with the expression "self-standing mobile device" is meant first of all that the device according to the invention does not have any physical constraint with any external apparatus such as pipes, mechanical arms or other mechanical elements different from it, as well as connecting cables for the communication with the surrounding environment or for the recovery of the device itself; moreover, it is also understood that the device according to the present invention does not have technical elements able to allow its movement in an active manner, controlled from the outside, in the medium in which it is dispersed. On the contrary, it is transported in a passive manner by the motion of the flow of the medium in which it is dispersed, remaining immersed in it. In other words, the device according to the invention is subjected to a passive-type handling due to the flow according to which the solid material itself moves inside the container in which it is stored and/ or transported.

In the use, once the chemical-physical parameters of interest have been detected by means of the at least one sensor adapted to the purpose, such information can be conveniently sent to the outside of the device through the at least one unit for wireless transmission of information.

According to a first embodiment of the self-standing mobile detection device according to the invention, such solid matrix is a continuous phase and such at least one detection element able to detect chemical-physical parameters and such at least one unit for wireless transmission of information are completely or partially included in the solid matrix; specifically, such at least one detection element able to detect chemical-physical parameters and such at least one unit for wireless transmission of information are indirectly in communication with the external environment, when completely included in said solid matrix, or directly, when partially included in said solid matrix.

According to the present invention, with the term "detection element" is meant a technical element which uses a mechanical, electronic and/ or chemical principle for the detection and/ or the measurement of a chemical-physical parameter, related to a chemical-physical property, for example the presence of a specific chemical species, as well as its amount, which can be expressed in terms of concentration in the air or the presence of an electromagnetic radiation in the surrounding environment, as well as its intensity, which can be expressed in terms of position of the device. Such detection element is able to transmit information about such chemical-physical parameter to another technical element which can be connected thereto, specifically to a unit for transmission.

The above-mentioned detection element able to detect chemical-physical parameters is a sensor.

More preferably, the solid matrix is made of plastic material, preferably of a material selected from the group consisting of natural rubber, synthetic rubber, porous plastic foam material and any combination of the preceding elements.

According to a different embodiment of the self-standing mobile detection device according to the invention, the solid matrix is shaped in a rigid shell defining an internal cavity, in which said rigid shell comprises at least one hole able to put in fluid communication said internal cavity with the external environment and in which such internal cavity comprises such at least one sensor able to detect chemical-physical parameters and such at least one unit for wireless transmission of information.

Preferably, the rigid shell of the self-standing mobile detection device according to the invention can be made of porous material, which can more preferably be plastic material.

In accordance with this last embodiment of the self-standing mobile detection device according to the present invention, the at least one hole able to put in fluid communication the internal cavity with the external environment consists in a plurality of holes intrinsically included in the porous material with which the rigid shell is made.

In an extremely convenient manner, in accordance with this last embodiment, the operating principle of the self-standing mobile detection device according to the invention proves to be extremely simplified: the presence of a plurality of holes, as can be the multitude of pores intrinsically present in a rigid shell made of porous material, allows to avoid any operating problem due to the clogging thereof, for example due to the intrusion of solid material or powder coming from the outside, a rare but still possible event, in particular when there is only one hole.

Alternatively, when the rigid shell of the self-standing mobile detection device according to the present invention is not made of porous material, such rigid shell can comprise means for closing the at least one hole, for example a small door or a valve.

Thanks to this last embodiment, operating problems due to the clogging of the at least one hole, for example due to the intrusion of solid material or powder coming from the outside, are avoided as well.

In fact, also in the case that the self-standing mobile detection device according to the invention is used in a silo or in a container for the storage of solid material, in particular of coarse-grained raw materials, such as cereal grains or pellet of any material, it is quite common that inside such containers high amount of powder is formed which, in the long term, could cause problems such as the above-mentioned ones.

In an embodiment, the internal cavity, comprising at least one sensor able to detect chemical-physical parameters and at least one unit for wireless transmission of information, can be at least partially filled with expanded porous plastic foam material, such as for example expanded open-cell polystyrene or polyurethane foam. This has also the advantage to firmly maintain in position the at least one sensor and the at least one unit for transmission of information as well as to attenuate possible mechanical stress on them (e.g. impacts during handling of the device). Equally preferably, such at least one sensor able to detect chemical-physical parameters comprised in the self-standing mobile detection device according to the invention can be a sensor able to measure a chemical-physical parameter selected from the group consisting of temperature, humidity, visible radiation, sound waves, vibrations, concentration of volatile organic compounds in the air, concentration of carbon dioxide in the air, concentration of molecular oxygen in the air, and also position, speed and acceleration of the sensor and therefore of the device itself.

In equally preferable manner, the unit for wireless transmission of information comprised in the subject device is able to receive and transmit information by means of a wireless local network (WLAN, i.e. Wireless Local Area Network), more preferably using a Wi-Fi^{®} technology.

Specifically, as it will be explained extensively below, the self-standing mobile detection device according to the present invention is able to send information to and receive information from devices located outside the container comprising the solid material, in particular the raw material in which the device is dispersed during the use, but relatively proximate to it (in the order of some tens of meters at most) by means of the above-mentioned local network. In this way the self-standing mobile device according to the invention can, for example, communicate with a totally similar self-standing mobile detection device or with a fixed device, for example a control unit or a transponder.

The self-standing mobile detection device according to the present invention further comprises a GPS (Global Positioning System) receiver.

In this way, a specific machinery and/ or an operator can identify the self-standing mobile device and therefore identify the bulk of the solid material in which it is dispersed, as well as accordingly localize both the device and the bulk of the solid material in which it is dispersed.

Advantageously, in accordance with this last embodiment, the self-standing mobile detection device according to the present invention can send and/ or receive information with a satellite system with in order to remotely determine the geographical location of such device.

The self-standing mobile detection device according to the present invention further comprises a battery.

Preferably, according to the present invention, the battery of the self-standing mobile detection device is a battery rechargeable by means of NFC o similar technology, which is a battery rechargeable without cables by putting the device according to the present invention on to a suitable console and/ or on to a suitable recharge station.

Moreover, the self-standing mobile detection device according to the present invention comprises an integrated chip for the transmission of information by means of a connectivity technology in bidirectional wireless mode with a short/ medium range. Specifically, such integrated chip is a chip for the transmission of information by means of RF (Radio Frequency) technology, preferably WiFi^{®}, Bluetooth or NFC (Near Field Communication) technology.

Advantageously, such integrated chip allows the self- standing mobile detection device according to the present invention to communicate with an external device in wireless mode by means of radiofrequency technology. This specific function can allow a self-standing mobile detection device according to the invention to communicate with an identical self- standing mobile detection device according to the invention or with a device not according to the invention which implements such technologies located proximate thereto, for example a reading device, so called "reader", i. e. at a distance between a few linear centimeters and some tens of meters.

The functionality explained in the previous paragraph is particularly useful for sending information to an appropriate device not according to the invention, such as a device able to recognize and identify a self-standing mobile detection device according to the present invention, able to recognize the present self-standing mobile detection device and to distinguish it from a different device also according to the present invention.

Consistently, the integrated chip for the transmission of information by means of connectivity technology in bidirectional wireless mode with a short/ medium range comprised in the self-standing mobile detection device according to the present invention, in cooperation with the above-mentioned unit for wireless transmission of information, can act as an identifying tag for the passive-type recognition of a single device according to the present invention by a totally conventional reader compatible with the specific connectivity technology which such chip can use.

In this way too, a specific machinery and/or an operator can first of all, using the above-mentioned reading device, identify the self-standing mobile device and then, as it will be explained in detail below referring to the system and to the process according to the present invention, identify the bulk of the solid material in which the device is dispersed, as well as accordingly localize both the device itself and the bulk of the solid material in which it is dispersed.

Moreover, a specific machinery and/or an operator can easily distinguish a self-standing mobile detection device according to the invention from another similar self-standing mobile detection device: this makes the self-standing mobile detection device according to the present invention particularly practical during the use in case a rapid identification thereof would be required, for example in case of a defective device.

In fact, more in general, it has to be said that the self-standing mobile detection device according to the present invention can comprise means for the univocal identification thereof, means that can be exemplified in the embodiment just described, completely preferable and non-limiting, and that are effective in distinguishing a general self-standing mobile detection device according to the present invention from any different self-standing mobile detection device, the latter also being according to the present invention.

In accordance with a particular embodiment, the self-standing mobile detection device according to the present invention can further comprise a vibration unit able to transmit a vibration to the whole device.

Advantageously, when inside the self-standing mobile detection device according to the present invention is transmitted a vibration which propagates to the whole device, an appreciable movement can be given to the device itself: such functionality can be particularly useful for the change of position of the device inside the solid material, in particular the raw material, in which it is dispersed during the use. Such change of position could be advisable in case both for a variation of the position of the device itself for the purposes of a better detection of chemical-physical parameters of such solid material or of the surrounding environment, and in the case wherein the self-standing mobile detection device according to the present invention should get stuck inside a duct or due to the interaction with the apparatuses by means the solid material (in particular the raw material) is moved, in which said device is dispersed during the use.

In accordance with a preferred embodiment, the self-standing mobile detection device according to the present invention can simultaneously comprise a chip for the transmission of information by means of, for example, NFC technology and a vibration unit; such particular embodiment allows during use, in case a plurality of devices according to the present invention are dispersed in the solid material, to avoid an accumulation of more devices according to the present invention in a single region of the volume of such solid material.

Indeed, in accordance with such preferred embodiment, when a first self-standing mobile detection device according to the present invention detects by means of such chip, possibly using NFC technology, a second proximate self-standing mobile detection device, the vibration unit is activated and a appreciable movement is consistently given to the first device so as to cause a change of the position thereof, vibration and movement which are applied to the first device until it has moved of an appropriate distance so that the second device is no more detected by the chip, possibly using NFC technology of the first device.

Therefore, in an extremely convenient manner, an incorrect distribution of devices inside the bulk of the solid material, in particular of the raw material, would be automatically avoided, thus enhancing the monitoring of chemical-physical parameters inside thereof.

Preferably, the self-standing mobile detection device according to the present invention can have a spheroidal shape or a polygonal shape, more preferably it can have a spherical shape.

Specifically, a device with spherical shape is particularly effective in movements when dispersed inside a solid material in form of a powder and/or of a granular material thanks to the absence of corners, protrusions and to the minimization of the contact surface with it compared to an object of equal volume, but with polygonal shape.

In fact, a self-standing mobile detection device according to the invention made in spherical shape not only has less friction in the solid material in which it is dispersed in the use, compared to an object of equal volume but with polygonal shape, but also shows in comparison thereto a higher ease of recovery and it is less prone to get stuck in the apparatuses through which the solid material (in particular the raw material) is moved, in which it is dispersed during the use.

In an equally preferable manner, the self-standing mobile detection device according to the present invention has a major axis, in case it has a shape of polygonal type, or a major diameter, in case it has a shape of spherical or oval type, with a value between 1 cm and 20 cm, preferably with a value between 2 cm and 8 cm.

In accordance with a particular embodiment, the rigid shell of the self-standing mobile detection device according to the present invention can comprise two concave hemispheres, of which a first hemisphere ends with a first perimetric edge and a second hemisphere ends with a second perimetric edge, wherein such hemispheres can be coupled together in a removable manner through contact between such first perimetric edge and such second perimetric edge.

In a totally preferred manner, the contact between such first perimetric edge and such second perimetric edge can substantially occur by screw or snap-fit coupling.

Advantageously, in accordance with the last described embodiment, the self-standing mobile detection device according to the present invention proves to be particularly practical for example during maintenance operations, cleaning operations or operation of substitution of its battery. In fact, once the device has been recovered, the operator can de-couple the first hemisphere from the second hemisphere by a simple, totally conventional operation of decoupling and access to the at least one sensor and to the battery.

In accordance with a different embodiment of the self-standing mobile detection device according to the present invention, when the above-mentioned solid matrix occurs as a continuous phase and the above-mentioned at least one detection element and the above-mentioned at least one unit for transmission of information are completely included in the solid matrix, such solid matrix can be made as a fluid-tight continuous phase comprising plastic material, preferably consisting of a plastic polymer.

In an extremely convenient manner, having a fluid-tight matrix, the device of the invention made according to the present embodiment solves in a definitive way possible operating problems due to the possibility to have holes, in this embodiment not present, for example due to the intrusion of solid material or powder coming from the outside.

Preferably, in the self-standing mobile detection device according to this last embodiment, the above-mentioned at least one detection element is a radiofrequency receiver and the above-mentioned at least one unit for wireless transmission of information is a radiofrequency transmitter; at the same time, such receiver and such transmitter are provided as a single integrated antenna for receiving and transmitting radiofrequency; the device assembled as described further comprises an integrated chip for the transmission of information by means of a connectivity technology in bidirectional wireless mode with a short/medium range, preferably a chip for the transmission of information by means of RF (Radio Frequency), more preferably by means of NFC technology.

As previously disclosed in relation to a different embodiment of the device according to the present invention, also a device made in accordance with this last embodiment is able to communicate with an external device in wireless mode by means of radiofrequency technology.

This specific function allows a self-standing mobile detection device according to the invention to communicate with a device not according to the invention which implements such technologies, for example an external transponder able to receive and transmit a signal (of the type of an external antenna), located proximate thereto, i. e. at a distance between a few linear centimeters and some tens of meters.

The functionality explained in the previous paragraph is particularly useful for sending information to an appropriate device not according to the invention, such as a device able to recognize and identify a self-standing mobile detection device according to the present invention, able to recognize the subject self-standing mobile detection device and to distinguish it from a different device also according to the present invention, i. e. such integrated chip, in cooperation with the above-mentioned integrated antenna, can act as an identification tag for passive recognition of a single device according to the present invention by a totally conventional reader compatible with the specific connectivity technology which such chip can use.

In this way, a specific unit in communication with such external transponder (and also an operator) can advantageously recognize the self-standing mobile detection device according to the invention in a univocal manner, making such device particularly practical during use for the recognition and the localization of the bulk and/or a batch of material in which it is dispersed, as it will be explained below.

Preferably, the above-mentioned solid matrix of the self-standing mobile detection device in accordance with this last embodiment is made of a material having structure and superficial roughness consistent with that of the bulk in which it is inserted and such that it can be effectively and completely dispersed in it, as well as follow the handling of the bulk with the same dynamics of the bulk itself.

Advantageously, making a device according to the present invention with a solid matrix of a material having such characteristics of roughness, once dispersed in the use in a solid material in form of a granular material and/or of a powder, for example grain with high flow index (so called "free-flowing" solid material), the device according to the present invention is dragged more effectively by the flow of such material, when the latter is moved inside the container in which it is stored and/or transported.

In fact, depending on its granulometric, morphological and rheological characteristics, such solid material in form of a granular material and/or of a powder could glide on the surface of the device of the present invention without causing the desired dragging of the device itself: such phenomenon does not occur in the case of the self-standing mobile device according to the present invention.

More preferably, in the self-standing mobile detection device according to this last embodiment, such solid matrix is made of a non-toxic vitreous material, of non-toxic plastic material or of any combination of the preceding elements.

Even more preferably, the self-standing mobile detection device according to this last embodiment has preferably dimensions between 0.5 cm and 2.0 cm.

The above-mentioned technical problem is solved by the use of a self-standing mobile detection device according to the invention in the detection and the monitoring of chemical-physical parameters, wherein such device is dispersed in a solid material, in particular a solid material in form of a powder and/or of a granular material, which is in turn stored in a container suitable for its conservation and/or its transportation.

Preferably, the use of the self-standing mobile detection device according to the invention is envisaged in the detection and in the monitoring of the localization and/or of the geographical location of the device itself and/ or of the bulk of such solid material, in particular of the solid raw material in which it is dispersed.

More preferably, the use of the self-standing mobile detection device according to the invention is envisaged in the identification and in the recognition of the bulk itself of solid material in which it is dispersed.

Advantageously, the present self-standing mobile detection device is univocal digitally identified by means of a univocal identification code.

In this way, the present self-standing mobile detection device provides a digital key for the identification of the bulk in which it is dispersed, allowing the digitally identification of said bulk or batch of material, in which it is dispersed.

Indeed, the self-standing mobile detection device according to the present invention can act as an univocal physical key for digital identification of the bulk in which it is dispersed, so that to allow a complete tracking/ re-tracking of the bulk by means of external applications and to allow the association of said bulk with any information transmitted by said device.

In particular, said univocal physical key for digital identification can in its turn interface with operating systems and/ or with trackability /re-trackability software not according to the present invention (i.e. block chain).

Moreover, said physical key for digital identification can be used as a univocal identification element of the bulk in which the self-standing mobile detection device is dispersed. This use allows to link operating systems not according to the present invention in which are stored pieces of information concerning the bulk of the material in which the device is dispersed (i.e. logbook, commercial transactions, qualitative characteristics) .

Advantageously, the use of said physical key for digitally identification by applications not according to the present invention allows to achieve not only a complete tracking/ re-tracking of the bulk in which the device is dispersed, but also the association of said bulk with all digital information which were previously or subsequently associated with said bulk by applications not according to the present invention.

The specific uses of the self-standing mobile detection device according to the present invention described in the preceding paragraphs allow in an extremely convenient manner to monitor the position of a bulk, for example of a batch or of a load, of solid material since the first handling, for example, in case they are grain or seed, directly from the field starting from the harvest to the final depository in a storehouse or in a silo suitable for the purpose.

In this way, a complete tracking is provided, which is useful to trace back the entire route of a specific batch or of a load of solid material, in particular of raw material, for example a food commodities, from the production place to the definitive storage place and/or to the place of first transformation of such solid material, enabling therefore a complete tracking of the latter during the its whole handling. A complete tracking is also very useful to allow a correct management of the solid material entering in the definitive storage place, and/or in the place of first transformation, in order to ensure as a first step an appropriate separation of the single batches/of the single loads and, finally, to trace back possible loads stolen during the transportation.

Preferably, in accordance with the above-mentioned uses of a self-standing mobile detection device according to the invention, such solid material is a solid raw material intended to be used in agricultural, food and livestock industry, more preferably is selected from the group consisting of seeds, grain, fruits, spices, coffee, animal feed in pellets, granular animal feed, cereal meal and/or legume meal.

The above-mentioned technical problem is also solved by a system for the detection and the monitoring of chemical-physical parameters and for the transmission of information comprising a plurality of self-standing mobile detection devices according to the invention, and a control unit able to receive and/or send information from/to said plurality of devices.

In particular, such system is able to perform also operations of detection, monitoring and accurate control of chemical-physical parameters.

Preferably, the above-mentioned plurality of detection devices according to the invention consists of at least 3 devices, more preferably of at least 5 devices.

In particular, the number of devices of the system according to the present invention depends on the dimensions of the volume of solid material to be monitored. For example, in the case of a relatively small silo, for example a silo for the storage of a bulk of cereals and/or grain with a weight equal to about 10 tonnes, a system according to the invention comprising a number of detection device equal to at least 1, but preferably 3, can be used.

Most preferably, the control unit can be a data processor and/ or a unit for the storage of data which allows the interaction with a human operator.

Preferably, the control unit comprised in the system according to the present invention is a Programmable Logic Controller (PLC).

More preferably, such control unit is in turn connected with a further data processor and/ or unit for the storage of data, for example a smartphone, which allows the interaction with a human operator.

Such control unit comprises a standard GPS receiver for georeferencing pieces of information which are transmitted to the outside of the system.

Advantageously, the human operator can supervise the detection, monitoring and control activity of the system according to the present invention, for example controlling the localization or the geographical location of the bulk of such solid material in which the devices of the system according to the present invention are dispersed.

Then, in accordance with a preferred embodiment, the system according to the present invention can further comprise a transponder, for example an antenna which is external to the plurality of self-standing mobile devices according to the present invention, able to receive and transmit a signal from and to such plurality of devices and able to transmit again and receive such signal to the control unit.

Advantageously, such transponder is useful to facilitate or improve the quality of the communication between the plurality of the devices for the detection of chemical-physical parameters and for the transmission of information according to the invention and the control unit (and/ or between such plurality of devices and a satellite system, as such devices comprise a GPS receiver each and such control unit is able to communicate with the outside of the system by means of GPS technology).

In fact, the solid material, in which the plurality of devices of the system according to the invention is dispersed, as well as the structural elements of the containers, such as for example vertical silos or cisterns, in which such material is stored, can weaken the signals coming from mobile detection devices directed outside the silo and/ or inside it, and/ or hinder the signals coming from the outside, in particular coming from the control unit or from a satellite system, and directed toward such devices.

Therefore, in a completely convenient manner, as it will be better shown in the detailed description, the system according to the present invention allows to effectively detect and monitor chemical-physical parameters in order to improve the conservation conditions of the solid material, in which during use such plurality of devices is dispersed.

Moreover, in accordance with a particular embodiment, the system according to the present invention can not only perform an operation of detection and monitoring of the chemical-physical parameters, but it can also carry out an operation of control of such chemical-physical parameters, for example in order to adjust one of such chemical-physical parameters.

The above-mentioned control unit comprised in the system according to the present invention comprises a GPS receiver for georeferencing pieces of information which are transmitted from said control unit to the outside of the system, so as to allow a complete tracking of the above-mentioned plurality of self-standing mobile detection devices.

Moreover, the above-mentioned technical problem is also solved by a process for the detection and the monitoring of chemical-physical parameters which comprises the following steps:
a) providing a solid material in form of a powder and/or a granular material, wherein said solid material is intended to be used in agricultural, food and livestock industry, which is stored in a container (30; 230) suitable for the conservation and/or for the transport of said solid material and a system (10; 210) according to claim 7;
b) dispersing a plurality of self-standing mobile detection devices (1a-1e; 101a-101e) comprised in said system (10; 210) in said solid material;
c) detecting and acquiring, by means of said plurality of self-standing mobile detection devices (1a-1e; 101a-101e) dispersed in said solid material, pieces of information related to chemical-physical parameters selected from the group consisting of concentration of volatile organic compounds in the air, concentration of carbon dioxide in the air and concentration of molecular oxygen in the air, carrying out said detection of said chemical-physical parameters,
d) sending from said self-standing mobile detection devices (1a-1e; 101a-101e) to said control unit (11; 211) said pieces of information so detected and acquired, carrying out said monitoring of said chemical-physical parameters; and
tracking said plurality of self-standing mobile detection devices (1a-1e; 101a-101e) using said control unit (11; 211) comprising the GPS receiver for georeferencing pieces of information which are transmitted from said control unit (11, 211) to the outside of said system.

Preferably, the process for the detection and the monitoring of chemical-physical parameters according to the present invention which comprises the following further steps:
e) providing by means of such control unit pre-set parameters related to chemical-physical properties, such as a property of the environment, a property of the material in which such devices are dispersed or a property of the device itself, wherein such pre-set parameters have a value in a range between a pre-set minimum value and a pre-set maximum value;
f) carrying out by means of such control unit a processing operation, wherein such acquired pieces of information related to chemical-physical parameters are compared with such pre-set parameters related to the same chemical-physical property, thus carrying out a control of the previously detected, acquired and monitored chemical-physical parameters.

Preferably, such step c) of detecting and acquiring pieces of information related to chemical-physical parameters and/or such step d) of sending from such detection devices pieces of information so acquired to a control unit can be carried out repeatedly over time.

More preferably, such step c) and/or such step d) can be carried out repeatedly with a pre-set time frequency, even more preferably with regular pre-set time frequency, thus carrying out a monitoring of the chemical-physical parameters continuous in time.

Thanks to this last embodiment it is therefore possible to detect, acquire and monitor information related to chemical-physical parameters repeatedly with regular time frequency, pre-set depending on the needs of the operator, implicating a convenient versatility of use of the system according to the invention. For example, such operation of detection, acquisition and monitoring can be performed every 15 minutes, every 60 minutes or every 24 hours.

Therefore, in an automatic manner or upon a simple command of a human operator, the control unit can send a signal to one or more detection devices. Each of such devices, once it has received through of each unit for transmission of information the signal coming from the control unit, will proceed to step c) of detecting and acquiring pieces of information related to chemical-physical parameters, for example from the surrounding external environment.

In an equally preferable manner, the step d) of sending pieces of information related to chemical-physical parameters of the process according to the present invention can be performed using a transponder, wherein the transponder is able to receive the pieces of information coming from detection devices and transmit again such information to the control unit.

Preferably, the process for the detection and the monitoring of chemical-physical parameters according to the present invention wherein the step d) of sending acquired pieces of information related to chemical-physical parameters can be performed sending the acquired pieces of information related to chemical-physical parameters related to chemical-physical parameters from a single self-standing mobile detection device to the other before such pieces of information are sent to the control unit and/or to the transponder.

In accordance with the embodiment described in the previous paragraph, it is possible to perform a transmission of information from each single self-standing mobile detection device to the control unit in case the signal coming from one or more devices of the multitude of devices, dispersed in the solid material, should be weak or even absent.

In fact, depending on the strength of the signal which can be generated by the unit for transmission comprised in each self-standing mobile detection device according to the invention, on the kind of monitored solid material, on the volume in which the devices according to the invention are dispersed, on the distribution of such devices in the subject volume, the signal coming from a single self-standing mobile detection device and directed to the control unit and/or to the transponder could be not sufficiently strong to guarantee an efficient transmission of the acquired data related to chemical-physical parameters.

Therefore, in case the situation just described should occur, one or more devices assume a link function between other different detection devices, receiving the signal of the latter and re-sending it to the control unit and/or to the transponder.

According to a preferred embodiment, the above-mentioned technical problem is solved by a process for the detection and the monitoring of chemical-physical parameters which comprises the following steps:
a) providing a solid in form of a powder and/or a granular material which is stored in a container suitable for the conservation and/or for the transport of said solid material and a system according to the present invention as previously described, wherein the above-mentioned control unit comprises the GPS receiver as previously described;
b) dispersing in the solid material a plurality of self-standing mobile detection devices comprised in such system;
c) sending from such transponder a radiofrequency signal towards the plurality of mobile detection devices comprised in the system and dispersed in the solid material;
d) detecting and acquiring, by means of such plurality of self-standing mobile detection devices, pieces of information related to such radiofrequency signal, carrying out the detection and the acquisition of chemical-physical parameters;
e) sending from such plurality of self-standing mobile detection devices to said transponder the pieces of information so detected and acquired;
f) sending by means of such transponder to a unit of interception and control the pieces of information so detected and acquired, thus carrying out the monitoring of chemical-physical parameters.

In a totally preferred manner, the process according to the present invention in the previous paragraph can comprise a final step of sending from such control unit to a data processor and/ or to a unit for the storage of data georeferenced pieces of information related to such chemical-physical parameters so monitored, wherein such data processor and/ or such unit for the storage of data are outside the above-mentioned system and allow the interaction with a human operator.

Advantageously, as previously disclosed in relation to the use of a mobile detection device according to the present invention, the system according to the present invention can be efficiently utilized to perform the process of detection, acquisition and monitoring, as described in the previous paragraphs, which envisages sending georeferenced pieces of information related to chemical-physical parameters so detected, acquired and monitored to any device external to the system.

In other words, the process according to the present invention according to this last embodiment allows an operator, during the use and/ or the consulting of the above-mentioned external device, for example a smartphone, to in turn monitor such so georeferenced pieces of information related to chemical-physical parameters and, thus, allows a complete tracking of the self-standing mobile devices comprised in the system of the present invention.

In accordance with a preferred embodiment of the process according to the present invention, the above-mentioned solid material in form of a powder and/ or of a granular material consists of grain, and such plurality of devices is separated from the solid material in which it is dispersed, i. e. from such grain, during a process of pre-cleaning or cleaning of such grain, preferably by means of cleaning machines.

Advantageously, the compact morphology and the small dimensions of the self-standing mobile detection device according to the present invention allow the devices comprised in the above-mentioned plurality of devices to be easily separated during the process of pre-cleaning or cleaning of the grain without hindering in any way the regular execution of such processes.

In accordance with the process according to the present invention too, such solid material is a solid raw material intended to be used in agricultural, food and/ or livestock industry, more preferably it is selected from the group consisting of fertilizer in granular form, plant seeds, grain, fruits of plants, spices, coffee grains, fertilizer granules, animal feed in pellets, granular animal feed and flours. In a totally preferred manner, such solid material is intended to be used in agricultural, food and/or livestock industry and it is in the form of seeds or fruits of plants, including cereal seeds or, more in general plant seeds, intended for sowing cash crops, cereal seeds or, more in general plant seeds, intended for human and/ or animal nutrition.

According to the present invention, with the expression "continuous phase" is meant that such solid matrix exists in form of a single phase of material in which the at least one detection element able to detect chemical-physical parameters and the at least one unit for wireless transmission of information are dispersed, implicating the existence of a continuous phase-detection element interface, of a continuous phase-unit for transmission of information interface, of a continuous phase-external environment interface and, optionally, of a detection element-external environment interface and/ or of a unit for transmission of information-external environment interface, when such at least one detection element, a sensor, and such at least one unit for transmission of information are partially included in said solid matrix.

Moreover, according to the present invention, with the expression "vibration unit" is meant a vibrator, i.e. a mechanical element able to generate vibration in every spatial direction. Usually, such mechanical element is intended an electric motor around whose shaft an eccentric mass is mounted. Accordingly, the rotation of the shaft causes a forced vibration.

Then, according to the present invention, with the expression "control unit" is meant a controller, for example a Programmable Logic Controller (PLC) or a data processor, which performs one or more programs for data processor and processes digital and/or analogical signals coming from the self-standing mobile detection devices, and is in its turn able to transmit digital and/or analogical signals to the self-standing mobile detection devices, by means of actuators or transponders, for example an antenna external to the device, located in a structure, for example a container or a silo for the conservation of solid materials, in particular raw materials.

With the term "transponder" is meant an automatic device which receives and transmit again a signal, for example an antenna. Often it is an element which is able to amplify the received signal and to transmit it again on a different frequency.

Finally, with the expression "solid material in form of a granular material and/or of a powder" is meant a rough or semi-finished material whose elementary units are solid particulate and show a typically globular shape, preferably of dimensions bigger than one micrometer. Examples in the agricultural and food industry can be pellet or granules of clotted substances or cereal seeds or fruit seeds such as grain grains.

Further characteristics and advantages of the present invention will become obvious from the following description of some of its preferred embodiments, given by way of non-limiting examples, with reference to the attached drawings.

### Brief Description of the Drawings

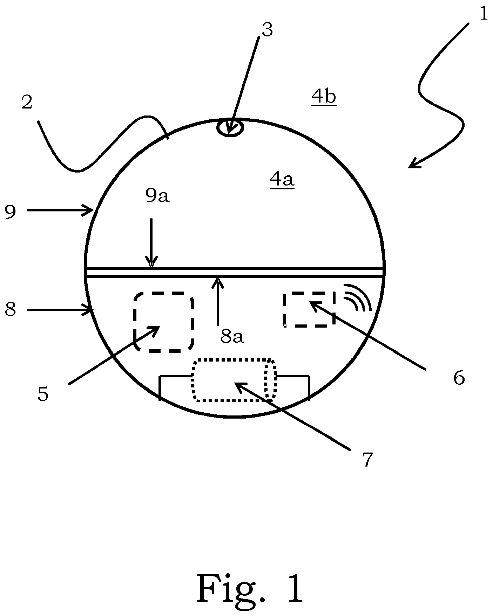

Figure 1 schematically shows a self-standing mobile device for the detection of chemical-physical parameters and for the transmission of information, having spheroidal shape, comprising a first lower hemisphere and a second upper hemisphere, in closed position, created according to the present invention;

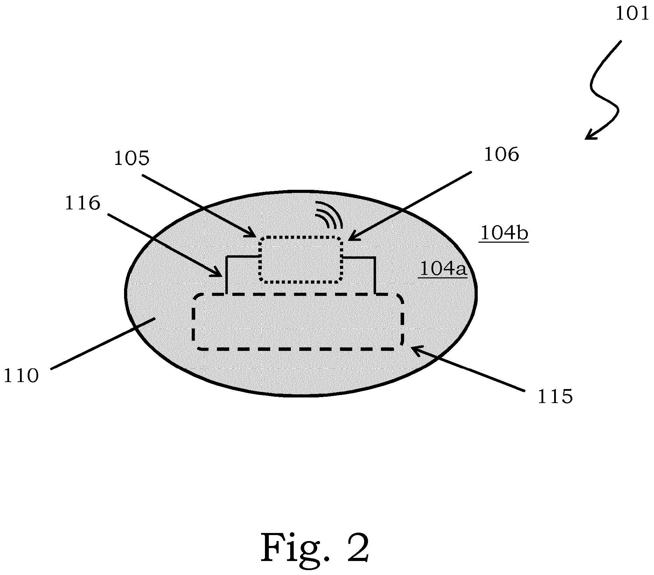

Figure 2 schematically shows a self-standing mobile device for the detection of chemical-physical parameters and for the transmission of information, according to a different embodiment of the present invention;

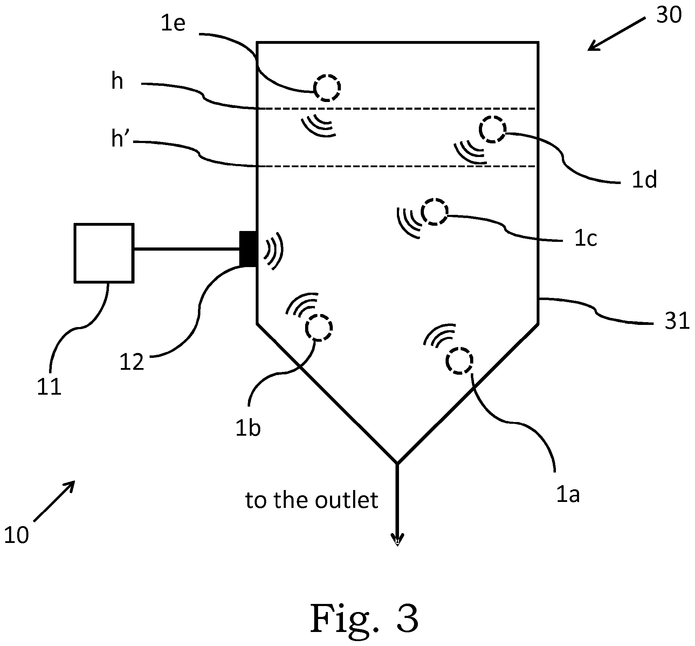

Figure 3 schematically shows a system for the detection and the monitoring of chemical-physical parameters and for the transmission of information according to the present invention comprising a plurality of self-standing mobile detection devices, of the type showed in Figure 1, dispersed in a solid material which is in turn contained in a silo not according to the invention;

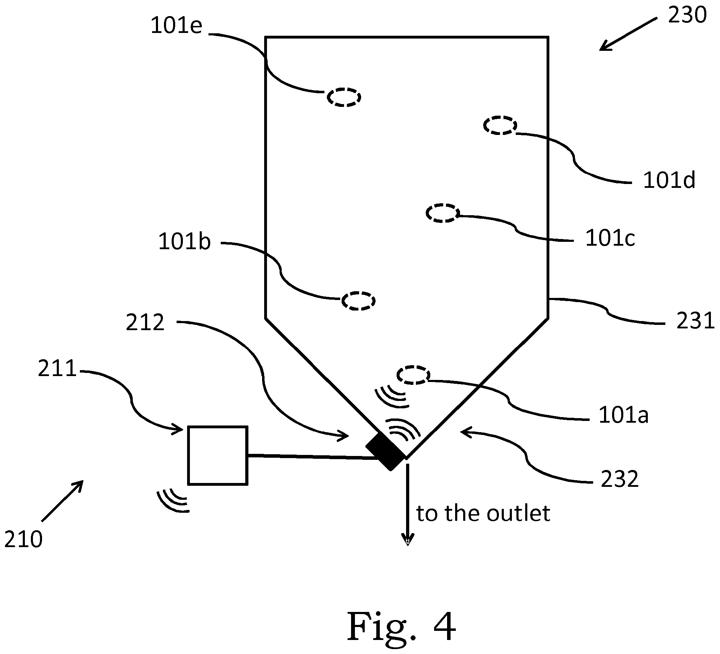

Figure 4 schematically shows a system for the detection and the monitoring of chemical-physical parameters and for the transmission of information according to the present invention comprising a plurality of self-standing mobile detection devices, of the type showed in Figure 2, dispersed in a solid material which is in its turn contained in a silo not according to the invention;

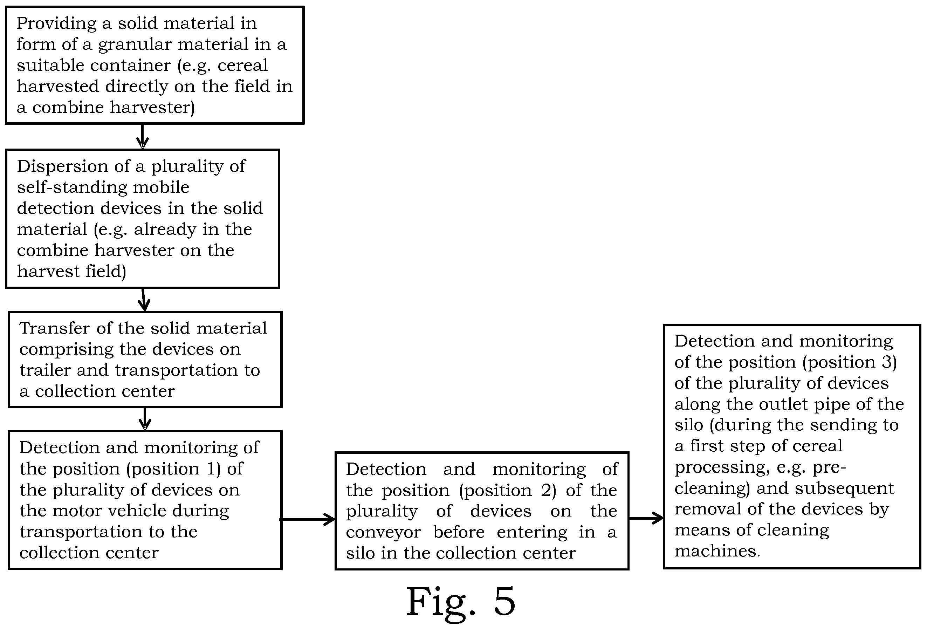

Figure 5 schematically shows a possible embodiment of the process for the detection and the monitoring of chemical-physical parameters according to the present invention.

### Detailed Description of Preferred Embodiments

In Figure 1 is showed an example of self-standing mobile detection device 1 for the detection of chemical-physical parameters and for the transmission of information according to the present invention comprising a rigid shell 2 and provided with at least one hole 3 able to put in fluid communication an internal cavity 4a of the device 1 with an external environment 4b. Moreover, it is possible to envisage means for closing the at least one hole 3, such as a lid or a valve, not shown in the drawing for simplicity reasons.

In a preferred embodiment, the rigid shell 2 is made of porous material and the at least one hole 3 is intrinsically included in the porous material which, by definition, has cavities and open-cell pores, which put in fluid communication the external environment 4b, external to the device 1, with the internal cavity 4a thereof.

According to this specific embodiment, the device showed in Figure 1 has a spheroidal shape, similar to a sphere slightly flattened at the poles.

A device 1 further comprise at least a sensor 5 able to detect chemical-physical parameters, such as a property of the environment, a property of the material in which the devices are dispersed or a property of the device itself, at least one unit 6 for wireless transmission of information and a battery 7 contained in the internal cavity 4a.

Moreover, the device showed in Figure 1 clearly has an external shell comprising two hemispheres: a first lower hemisphere 8, which ends with a first lower perimetric edge 8a, and a second upper hemisphere 9, which ends with a second upper perimetric edge 9a, coupled together in closed position. Further, the device 1 can comprise in the internal cavity 4a a GPS receiver and an integrated chip for the transmission of information by means of connectivity technology in bidirectional wireless mode with a short range, for example by means of NFC technology, not illustrated for simplicity reasons.

As it is obvious, also thanks to the specific production of the external shell in porous material, which allows the at least one sensor 5 to conduct its functions in relation to the external environment 4b without the appropriate manufacturing of at least one hole 3 in the external shell, as well as thanks to the spheroidal shape and to the specific conformation of the external shell 2 which have no indentations nor protrusions, the device 1 according to the present invention is clearly compact in terms of shape and suitable for passive handling when dispersed in a bulk of solid material in form of a granular material and/or of a powder.

The device 1 can also comprise a vibration unit able to transmit a vibration to the whole device, not illustrated in Figure 1.

Figure 2 shows a self-standing mobile device 101 for the detection of chemical-physical parameters and for the transmission of information according to a different embodiment of the present invention.

The device 101 has a solid matrix 110 made in a fluid-tight continuous phase and consisting of plastic material. More particularly, the internal environment 104a of the device 110 is totally airtight with respect to the external environment 104b of the device. More specifically, such solid phase consists of plastic material.

The device 101 comprises a detection element 105 and a unit 106 for wireless transmission of information, wherein the detection element 105 and the unit 106 for wireless transmission of information are provided as a single integrated antenna suitable for receiving and transmitting radiofrequency.

The device 101 comprises an integrated chip 115 for the transmission of information by means of a connectivity technology in bidirectional wireless mode with a short/medium range, specifically a chip for the transmission of information by means of RF (Radio Frequency) technology, connected to the integrated antenna by means of a totally conventional integrated circuit 116.

According to this specific embodiment, the device 101 showed in Figure 2 has an ellipsoidal shape, similar to and having the dimensions of an almond.

Advantageously, thanks to the elongated form of ellipsoidal shape, as well as thanks to its compact conformation and to the external surface which have no corners nor protrusions, the device 101 showed in Figure 2 is clearly suitable for passive handling when dispersed in a bulk of solid material in form of a granular material and/or of a powder.

To better illustrate the potentiality thereof, as well as the process for the use thereof, Figure 3 shows a system 10 for the detection and the monitoring of chemical-physical parameters and for the transmission of information comprising a plurality of self-standing mobile detection devices and a control unit 11.

The plurality of devices is embodied, limited to the embodiment of the present invention showed in Figure 3, in five mobile detection devices according to the present invention, i. e. a first device 1a, a second device 1b, a third device 1c, a fourth device 1d and a fifth device 1e, possibly identical in structure and shape and completely analogous to device 1 showed in Figure 1.

The detection devices 1a-1e of the system 10 are conveniently dispersed in a given amount of solid material of granular type, which keeps them one separated from the other, and at the same time physically support them without that the force exerted on them compromises their integrity or functionality. The solid material and the devices themselves comprised in it are in turn contained in a totally conventional silo 30, which is not according to the present invention.

The control unit 11 is located outside the silo 30 so as to facilitate an easy maintenance of such unit, as well as to facilitate wireline or wireless communication of the latter with other possible units or with a data processor for the interaction with a human operator.

The system 10 further comprises a transponder 12 conveniently located, according to this specific embodiment, on the external surface of the lateral walls 31 of the silo 30. Moreover, the control unit 11 can be a data processor and/or a unit for the storage of data which allows the interaction with a human operator.

By way of example only, each of the devices 1a, 1b, 1c, 1d and 1e of the system 10 according to the invention showed in Figure 2 can comprise a sensor able to detect and determine the position of any single self-standing mobile detection device, respectively.

Upon a simple command of a human operator, the control unit 11 sends a signal to each of the devices 1a-1e for the execution of a step of detecting and acquiring information related to the position of each self-standing mobile detection device.

Next, the pieces of information acquired by each self-standing mobile detection device 1a-1e are sent to the control unit 11; in particular, the subject sending step is performed using transponder 12, which receives the pieces of information coming from the detection devices 1a-1e by means of their units for transmission of information and it transmits them again to the control unit 11.

Specifically, it can occur that the device 1d generates a signal, directed to transponder 12, which is not sufficiently strong to reach transponder 12.

Therefore, in a very advantageous manner, the signal coming from device 1d (coding data acquired by the latter about its own position) is intercepted and received by another self-standing mobile detection device, for example the device 1c, nearer to transponder 12 with respect to device 1d, and transmitted again by this device 1c to transponder 12. In this way, a non-homogeneous distribution of the devices in the solid material with respect to the position of transponder 12 is easily obviated, this possibility being after all realizable using the system in the practice according to the present invention.

After receiving the pieces of information related to the position of each self-standing mobile detection device 1a- 1e, the control unit 11 carries out a processing operation, during which pieces of information related to the position of each self-standing mobile detection device 1a- 1e are compared with pre-set parameters related to the position of the devices, in a step of control of the information.

Specifically, the position of each self-standing mobile detection device 1a- 1e is compared with a threshold position having a maximum pre-set value, corresponding to a maximum height limit h, and a minimum pre-set value, corresponding to a minimum height limit h'.

In the specific showed example, the device 1e has a position, to which corresponds a height value which is higher than the maximum pre-set value, corresponding to a maximum height limit h.

Advantageously, the operation of control and comparison just described allows the operator not only to be informed about the pieces of information, related to specific chemical-physical parameters, acquired by each device, but also to be notified when the pieces of information related to chemical-physical parameters have a lower value than the minimum pre-set value and/or a higher value than the pre-set maximum value, i.e. in the present case when the position of a device corresponds to a height value higher than a maximum pre-set value.

The same sequence of operations can be performed with reference to chemical-physical parameters such as temperature, air humidity, concentration of any chemicals in the air or other chemical-physical parameters detected thanks to devices 1a- 1e.

It can therefore be affirmed that the system 10 according to the present invention, comprising a plurality of detection devices 1a-1e also according to the present invention, advantageously allows to carry out the process according to the present invention.

Similarly, Figure 4 shows a system 210 for the detection and the monitoring of chemical-physical parameters and for the transmission of information comprising a plurality of self-standing mobile detection devices 101a-101e and a control unit 211.

The plurality of devices is embodied, limited to the embodiment of the present invention showed in Figure 4, in five mobile detection devices 101a, 101b, 101c, 101d, 101e according to the present invention, totally analogous to the device 101, showed in Figure 2.

The detection devices 101a-101e of the system 210 are conveniently dispersed in a solid material of granular type, which physically supports them. The solid material and the devices themselves dispersed in it are in turn contained in a totally conventional silo 230, which is not according to the present invention.

The control unit 211 is located outside the silo 230 so as to facilitate an easy maintenance of such unit, as well as to facilitate wireline or wireless communication of the latter with other possible units, for example a smartphone for the interaction with a human operator.

In more detail, the control unit 211 is an industrial PC, externally protected by an aluminium container according to ATEX norms, completely watertight, not showed since it is totally conventional. The subject PC can connect to a Stub antenna pre-charged and FET preamplified, also comprised in the system 110 but not showed for simplicity reasons).

Such industrial PC is also provided with a hardware and software system for programming the devices 101a-101e, so as to univocally identify such devices with a RFID technology and to associate to each of them a univocal code, which in turn represents data related to the device itself.

Moreover, the data associated to the univocal code present in the memory of the integrated circuit in each device are registered in the memory of the device allowing for the identification of the device during the different steps of the handling of the bulk in which it is dispersed and, accordingly, of the bulk itself.

Thus, the device is used as a physical key for the digital identification of the bulk in which it is dispersed, in this way allowing the identification and the association of any information regarding the present bulk of material by applications for the trackability/ re-trackability not according to the present invention and by database or any kind of applications.

Data (which can be associated to said univocal code and which are registered on the memory of the device) are conveniently encoded and, since the combinations for the identification of the device are advantageously of the order of several thousands of billions, such an encoding represents a more than safe and unbreakable barrier for the protection of the data themselves in case of hacking.

Thus, in an extremely advantageous way, since the combinations for the identification of the device are in the order of many thousands of billions, they represent an extremely reliable barrier in case of a hacking attempt.

The industrial PC also comprises a standard GPS receiver, for example a device with Galileo constellation capability, the device thus allowing the control unit 211 to communicate with a further GSM/GPRS/EDGE/UMTS device, usable all over the world, so as to send to the latter pieces of information to the geographical location which was detected, acquired and monitored by the system according to the invention. In other words, the pieces of information which are sent from the control unit to the outside of the system are georeferenced.

In particular, the data sent through the network will be natively encrypted and receivable only by whom, who knows the key.

Moreover, the industrial PC in able to, when installed in fixed modality, to communicate through TCP IP protocol on local network, and it can be therefore reached through Web Server remotely through internet (in this case the information are sent with native crypt too, they are therefore not unencoded broadcasted).

Then, the system 101 comprises a transponder 212, in this case a loop antenna, which can be generally applied as a collar to any of the input or output pipes from the tank 230 or, more in general, from the container and/or means of transportation in which the solid material to be monitored is contained.

By way of example, as it is clear from Figure 4, the antenna 212 is located on the external wall 231 of the tank 230, more precisely situated in the bottom part 232 of the tank 230, i.e. where the horizontal section thereof is less wide, so that the solid material contained therein do not hinder the communication between the control unit 211 and a device according to the invention dispersed in the solid material (for example, the device 101a) during the passage of the solid material and of the subject device towards the outlet of the tank 230.

By only way of example, upon command of the operator, an actuator can determine the opening of a valve located in a output connection and downstream with respect to tank 230 (elements not showed since totally conventional), so as to open the outlet thereof and facilitate the exiting of the solid material contained therein.

During the passage of the moving solid material towards the unloading outlet of the tank 230 also the device 101a is transported with it in a passive way.

The control unit 211 can send a signal to the antenna 212, which in turn sends a radiofrequency signal towards the device 101a, once it has arrived proximate to the antenna 212 as an effect of the flow of solid material moving toward the unloading outlet of tank 230.

The device 101a can then detect and acquire pieces of information related to such radiofrequency signal, carrying out such detection and acquisition of chemical-physical parameters.

Therefore, the device 101a can send a response radiofrequency signal to the antenna 212, sending the pieces of information so detected and acquired.

Finally, the antenna 212 sends the pieces of information so detected and acquired to a control unit 211. The control unit 211 can carry out a monitoring of chemical-physical parameters, i.e. in this case it can monitor the position of the device 101a and in turn of the solid material in which it is dispersed, allowing also at the same time the univocal identification thereof.

As previously disclosed, the control unit 211 further comprises a standard GPS receiver, which allows the control unit 211 to communicate with a further device external to the system, for example a smartphone, and allows thus an operator to monitor the position of the device 101a wherever he is.

Finally, to best illustrate the use of the self-standing mobile detection device in the detection and the monitoring of the geographical location of the solid material in which it is dispersed, as well as to better illustrate the potentiality of the system for the detection and the monitoring of chemical-physical parameters and for the transmission of information according to the present invention, as well as the process for the use of the system itself, Figure 5 shows a particular embodiment of the process according to the invention.

Following the order indicated by the arrows, first takes place a step a) of providing a solid in form of a granular material, for example a cereal, harvested directly in field by means of a motor vehicle for cereal harvest, typically a combine harvester.

Step b) follows, consisting of dispersion of a plurality of mobile detection devices according to the present invention, comprised in a system according to the present invention in the above-mentioned solid material.

The dispersion of the plurality of self-standing mobile detection devices occurs directly in the combine harvester by means of a suitable system of automatic distribution, programmed to provide in the tipper of the combine harvester a device for each specific amount in weight or in volume of harvested material, for example each tonne of harvested cereals.

Commonly, the combine harvester operates in cooperation with the trailer of a tractor operating directly on the field for the transportation of the so harvested material, in which a plurality of self-standing mobile detection devices is dispersed.

A single trailer can receive material also from different combine harvesters, operating in different fields, in which can be supplied detection devices comprising an integrated chip, coding not only an univocal identification code of the single detection device, but also that of the combine harvester in which it is supplied.

In this way, when queried by a unit of detection and monitoring, for example a unit of control of the system according to the present invention, each device could also provide information about the origin of the material in which it is dispersed, in particular the field of origin.

In fact, the control unit comprises a standard GPS receiver for sending pieces of information to the outside of the system, so as to allow the tracking of the devices according to the present invention, the tracking of the bulk of solid material in which they are dispersed, as well as to totally georeference the pieces of information which are sent by the control unit to the outside of the system according to the present invention.

On the tipper of each single trailer can be installed a transponder, in this case an antenna, and a control unit of the system according to the present invention in communication with each other.

Each single trailer, once filled, is transported to a collecting station for the unloading inside a designated silo of the harvested material.

During the transportation from the harvest field to the silo, a first step c) takes place of sending by means of such transponder a radiofrequency signal towards the self-standing mobile detection devices dispersed in the transported solid material.

Subsequently, a step d) takes place of detection and acquisition, by means of such plurality of devices dispersed in the solid material, of the radiofrequency signal, coming from the transponder, carrying out a detection and an acquisition of chemical-physical parameters. The radiofrequency signal is detected by the antenna comprised in each subject detection device, associated to a chip integrated in the device, which is in this way queried by the transponder located on the tipper of the trailer.

Therefore, a step e) follows during which each detection device sends to the transponder a response radiofrequency signal, which codes pieces of information so detected and acquired.

Finally, the transponder sends such pieces of information to the control unit located on the trailer, carrying out a step f) of monitoring of chemical-physical parameters, in this case associated to the position (position 1) of the different detection devices and to the position of the bulk of solid material in which they are dispersed.

Once it has arrived at the collecting station, the solid material is unloaded from the trailer and sent to a silo.

Proximate to the input small door on the top of such silo, for example along a conveyor in input thereto, is located a transponder, for example an antenna, as previously described with reference to an embodiment of the system according to the present invention.

As soon as a specific bulk of material in which a plurality of detection devices is dispersed is let flow proximate to the antenna, a second step c') takes place. During the second step c') a radiofrequency signal is sent towards such moving devices to detect their passage.

Subsequently, a step d') takes place of detection and acquisition, by means of such plurality of devices dispersed in the solid material, of the radiofrequency signal, coming from the transponder, carrying out said detection and an acquisition of chemical-physical parameters. The radiofrequency signal is detected by the antenna comprised in each subject detection device, associated to a chip integrated in the device, which is in this way queried by the external control unit, located proximate of the entrance of the silo.

Therefore, a step e') follows during which each detection device sends to the antenna external thereto a response radiofrequency signal, which codes pieces of information so detected and acquired.

Finally, the antenna sends such pieces of information to a control unit of the system according to the present invention, originating a step f') of monitoring of chemical-physical parameters, in this case associated to the position (position 2) of the different detection devices and to the position of the bulk of solid material in which they are dispersed.

Once it is loaded on a silo, after a storage period, such solid material is put in motion toward the outlet of the silo to be subjected to processing processes.

Exiting the silo, a given bulk of material, in which a plurality of detection devices according to the present invention is dispersed, is let flow in proximity of the transponder, for example an antenna, as previously described, located in correspondence of the unloading outlet in the bottom part of the silo, for example on the wall of the silo or along an outlet pipe external thereto.

Then a second step c") takes place of sending, by means of such antenna, a radiofrequency signal towards the self-standing mobile detection devices dispersed in the solid material exiting the silo.

Subsequently, a step d") takes place of detection and acquisition, by means of such plurality of devices dispersed in the solid material, of the radiofrequency signal, coming from the antenna external thereto, in communication with the control unit, carrying out a detection and acquisition of chemical-physical parameters: the radiofrequency signal is detected by the antenna integrated in each subject detection device, which is queried by the transponder.

Then, a step e") follows during which each detection device sends to the antenna a response radiofrequency signal, which encodes pieces of information so detected and acquired.

Finally, the antenna sends such pieces of information to a control unit of the system according to the present invention, originating a step f') of monitoring of chemical-physical parameters, in this case associated to the position (position 3) of the different detection devices and to the position of the bulk of the solid material in which they are dispersed.

The above-mentioned steps of monitoring f), f) and f") can be followed by steps of sending, by means of the control unit of the system, of georeferenced pieces of information related to chemical-physical parameters so monitored to a smartphone and/or to a data processor external to the system, so as to allow the working staff to completely track down the movements of the self-standing devices comprised in the above-mentioned plurality of devices, as well as of the bulks of solid material in which they are respectively dispersed.

Advantageously, the process according to the present invention can be effectively performed in order to detect and monitor the geographical location of the solid material in which a self-standing mobile detection device according to the present invention is dispersed, as well as a system comprising a plurality of such devices. Therefore, the process according to the present invention allows to improve the management of the industrial process in which it is carried out, the latter being considerably improved from the point of view of the tracking of the moved and/or transported solid material, as well as allowing to immediately track down the solid material in case of emergency situations, for example thefts.

Therefore, from the previous description results that the self-standing mobile device for the detection of chemical-physical parameters and for the transmission of information, the system for the detection, the monitoring and the possible accurate control of chemical-physical parameters and for the transmission of information, as well as the process for the detection, the monitoring and the possible accurate control of chemical-physical parameters according to the present invention solve the technical problem and allow to achieve many advantages, first of all the possibility to register and monitor specific chemical-physical parameters inside a container for the storage of solid material, for example of solid raw materials, in form of a granular material and/or of a powder, without using fixed equipment or equipment with complicated operating principle.

Moreover, the present invention provides a system comprising a plurality of self-standing mobile detection devices wherein such system is absolutely effective both for the determination of the relative position of each self-standing mobile detection device of such plurality, and for the control of parameters inside the container containing the solid material in which such devices are dispersed, both for the univocal identification of the solid material itself inside a storage structure or a treatment structure, and for the remotely determination of the geographical location of the solid material, therefore for purposes of the complete tracking of the geographical location of the material in which said devices are dispersed from the production place to the final storage structure.

In other words, the self-standing mobile detection device according to the present invention shows easy maintenance, identification and recovery.

Regarding the recovery, in fact, the device according to the present invention can be easily separated from the raw material in which it is dispersed, for example during the process of pre-cleaning or cleaning of the grain in which it is dispersed, thanks to the simple conformation which allows the movement of the device through the solid material and, possibly, the recovery by means of cleaning machines or, for examples, by means of specific sieves.

The recovery of the self-standing mobile detection device is further facilitated by the specific components that can be comprised in it, including for example integrated chips for the transmission of information by means of a connectivity technology in bidirectional mode with a short range.

## Claims

1. Self-standing mobile detection device (1; 101) for the detection of chemical-physical parameters inside a container for the storage of solid raw materials intended to be used in agricultural, food and livestock industry in form of a powder and/or of granules, in which it is immersed, and for the transmission of information, said device being able to be transported in a passive manner by the motion of a flow of said solid materials, said device comprising at least one detection element (5; 105) able to detect chemical-physical parameters, at least one unit (6; 106) for wireless transmission of information relating to said chemical-physical parameters and a solid matrix made of plastic material, said at least one detection element (5; 105) able to detect chemical-physical parameters and said at least one unit (6; 106) for wireless transmission of information being at least partially included in said solid matrix and being in communication with the external environment, said self-standing mobile detection device (1; 101) further comprising an integrated chip for the transmission of information by means of a connectivity technology in bidirectional wireless mode with a short/medium range,
wherein said at least one detection element (5) is a sensor suitable for measuring a chemical-physical parameter selected from the group consisting of concentration of volatile organic compounds in the air, concentration of carbon dioxide in the air and concentration of molecular oxygen in the air, and
wherein the self-standing mobile detection device (1; 101) further comprises a Global Positioning System, GPS, receiver and a battery (7).

2. Self-standing mobile detection device (1) according to claim 1, wherein said solid matrix is a continuous phase and wherein said at least one detection element (5) able to detect chemical-physical parameters and said at least one unit (6) for wireless transmission of information are completely or partially included in said solid matrix, said at least one detection element (5) able to detect chemical-physical parameters and said at least one unit (6) for wireless transmission of information being indirectly in communication with the external environment, when completely included in said solid matrix, or directly, when partially included in said solid matrix.

3. Self-standing mobile detection device (1) according to claim 2, wherein said solid matrix is shaped in a rigid shell (2) defining an internal cavity (4a), in which said rigid shell (2) comprises at least one hole (3) able to put in fluid communication said internal cavity (4a) with said external environment (4b) and in which said internal cavity (4a) comprises said sensor (5) able to detect chemical-physical parameters and said unit (6) for wireless transmission of data.

4. Self-standing mobile detection device (1) according to claim 3, wherein said rigid shell (2) comprises means for closing said at least one hole (3).

5. Self-standing mobile detection device (1) according to claim 3, wherein said rigid shell (2) is made of porous material.

6. Self-standing mobile detection device (1) according to any one of preceding claims, wherein said integrated chip is a chip for the transmission of information by means of RF, i.e. Radio Frequency, preferably by means of NFC technology.

7. System (10; 210) for the detection and the monitoring of chemical-physical parameters and for the transmission of information comprising
- a plurality of self-standing mobile detection devices (1a-1e; 101a-101e) according to any one of preceding claims;
- a control unit (11; 211) able to receive and/ or send information from/to said plurality of self-standing mobile detection devices (1a-1e; 101a-101e), preferably said control unit (11; 211) being in communication with a data processor and/ or with a unit for the storage of data which allows the interaction with a human operator; and,
- a transponder (12; 212) able to receive and transmit a signal from and to said plurality of self-standing mobile detection devices (1a-1e; 101a-101e) and able to transmit again and receive said signal to said control unit (11; 211),
said control unit (11; 211) comprising a GPS receiver for georeferencing pieces of information which are transmitted from said control unit (11, 211) to the outside of said system, in order to allow a complete tracking of said plurality of self-standing mobile detection devices (1a-1e; 101a-101e).

8. Process for the detection and the monitoring of chemical-physical parameters which comprises the following steps:
a) providing a solid material in form of a powder and/or a granular material, wherein said solid material is intended to be used in agricultural, food and livestock industry, which is stored in a container (30; 230) suitable for the conservation and/or for the transport of said solid material and a system (10; 210) according to claim 7;
b) dispersing a plurality of self-standing mobile detection devices (1a-1e; 101a-101e) comprised in said system (10; 210) in said solid material;
c) detecting and acquiring, by means of said plurality of self-standing mobile detection devices (1a-1e; 101a-101e) dispersed in said solid material, pieces of information related to chemical-physical parameters selected from the group consisting of concentration of volatile organic compounds in the air, concentration of carbon dioxide in the air and concentration of molecular oxygen in the air, carrying out said detection of said chemical-physical parameters,
d) sending from said self-standing mobile detection devices (1a-1e; 101a-101e) to said control unit (11; 211) said pieces of information so detected and acquired, carrying out said monitoring of said chemical-physical parameters; and
tracking said plurality of self-standing mobile detection devices (1a-1e; 101a-101e) using said control unit (11; 211) comprising the GPS receiver for georeferencing pieces of information which are transmitted from said control unit (11, 211) to the outside of said system.

9. Process according to claim 8 comprising the following further steps:
e) providing, by means of said control unit (11; 211), pre-set parameters related to chemical-physical properties, wherein said pre-set parameters have a value in a range between a pre-set minimum value and a pre-set maximum value;
f) carrying out, by means of said control unit, a processing operation, wherein said acquired pieces of information related to chemical-physical parameters are compared with said pre-set parameters related to the same chemical-physical property, carrying out a control of said detected, acquired and monitored chemical-physical parameters.

10. Process according to claim 8 or 9 comprising the following steps:
a) providing a solid in form of a powder and/ or a granular material which is stored in a container (230) suitable for the conservation and/or for the transport of said solid material and a system (210) comprising said GPS receiver for georeferencing pieces of information which are transmitted from said control unit to the outside of said system;
b) dispersing in said solid material a plurality of self-standing mobile detection devices (101a-101e) comprised in said system (210);
c) detecting and acquiring by means of said plurality of self-standing mobile detection devices (101a-101e) dispersed in said solid material a radiofrequency signal, said radiofrequency signal being previously sent from said transponder (212) towards said plurality of self-standing mobile detection devices (101a-101e) comprised in said system (210) and dispersed in said solid material, carrying out said detection and acquisition of said chemical-physical parameters;
d) sending from said plurality of self-standing mobile detection devices (101a-101e) dispersed in said solid material to said transponder (212) pieces of information related to chemical-physical parameters so detected and acquired and, successively, sending by means of said transponder (212) to a control unit (211) said pieces of information related to chemical-physical parameters, carrying out said monitoring of chemical-physical parameters.

11. Process according to claim 10, wherein in said step a) of providing a solid in form of a powder and/or a granular material and a system (210) and in said step b) of dispersing in said solid material a plurality of self-standing mobile detection devices (101a-101e) comprised in said system (210), said container (230) is a tipper of a combine harvester and said integrated chip comprised in said plurality of selfstanding mobile detection devices (101a-101e) encodes an univocal identification code of said self-standing mobile detection device and an univocal identification code of said combine harvester in which said self-standing mobile detection device is supplied, preferably in said step b) the dispersion of said plurality of self-standing mobile detection devices (101a-101e) occurs directly in said combine harvester by means of a suitable system of automatic distribution, said system of automatic distribution being programmed to provide in said tipper of the combine harvester one of said plurality of self-standing mobile detection devices (101a-101e) for each specific amount in weight or in volume of harvested material.

12. Process according to claim 10 or 11, comprising a further step of sending from said control unit (211) to a data processor and/ or to a unit for the storage of data georeferenced pieces of information related to said chemical-physical parameters so monitored, wherein said data processor and/ or said unit for the storage of data are outside said system (210) and allow the interaction with a human operator.

13. Process according to any one of claims 8-12, wherein said solid material in form of a powder and/ or of a granular material consists of grain, and wherein said plurality of self-standing mobile detection devices is separated from said solid material in which it is dispersed during a process of pre-cleaning or cleaning of such grain, preferably by means of cleaning machines.

14. Process according to any one of claims 8-13, wherein said solid material is selected from the group consisting of grain, fruits, spices, coffee beans, animal feed in pellets, granular animal feed, cereal meal and/or legume meal.

## Patentansprüche

1. Selbständige mobile Detektionsvorrichtung (1; 101) zur Detektion von chemisch-physikalischen Parametern im Inneren eines Behälters zur Lagerung von festen Rohstoffen, die zur Verwendung in der Landwirtschafts-, Nahrungsmittel- und Viehzuchtindustrie in Form von Pulver und/oder Granulat bestimmt sind, in dem sie versenkt ist, und zur Informationsübertragung, wobei besagte Vorrichtung passiv durch die Bewegung eines Stroms der festen Materialien transportiert werden kann, wobei die Vorrichtung mindestens ein Detektionselement (5; 105), das chemisch-physikalische Parameter detektieren kann, mindestens eine Einheit (6; 106) zur drahtlosen Übertragung von Informationen, die sich auf die chemisch-physikalischen Parameter beziehen, und eine feste Matrix aus Kunststoffmaterial umfasst, wobei das mindestens eine Detektionselement (5; 105), das in der Lage ist, chemisch-physikalische Parameter zu detektieren, und die mindestens eine Einheit (6; 106) zur drahtlosen Übertragung von Informationen zumindest teilweise in der festen Matrix enthalten sind und mit der äußeren Umgebung in Verbindung stehen, wobei besagte selbstständige mobile Detektionsvorrichtung (1; 101) des Weiteren einen integrierten Chip zur Informationsübertragung mittels einer Verbindungstechnologie im bidirektionalen drahtlosen Modus mit einer kurzen/mittleren Reichweite umfasst,
wobei das mindestens eine Detektionselement (5) ein Sensor ist, der zur Messung eines chemisch-physikalischen Parameters geeignet ist, der aus der Gruppe ausgewählt ist, die aus der Konzentration von flüchtigen organischen Verbindungen in der Luft, der Konzentration von Kohlendioxid in der Luft und der Konzentration von molekularem Sauerstoff in der Luft besteht, und
wobei die selbstständige mobile Detektionsvorrichtung (1; 101) des Weiteren einen Globalen Positionsbestimmungssystem (GPS)-Empfänger und eine Batterie (7) umfasst.

2. Selbstständige mobile Detektionsvorrichtung (1) nach Anspruch 1, wobei besagte feste Matrix eine kontinuierliche Phase ist und wobei das mindestens eine Detektionselement (5), das chemisch-physikalische Parameter detektieren kann, und die mindestens eine Einheit (6) zur drahtlosen Informationsübertragung vollständig oder teilweise in der festen Matrix enthalten sind, wobei das mindestens eine Detektionselement (5), das chemisch-physikalische Parameter detektieren kann, und die mindestens eine Einheit (6) zur drahtlosen Übertragung von Informationen indirekt mit der äußeren Umgebung in Verbindung stehen, wenn sie vollständig in der festen Matrix enthalten sind, oder direkt, wenn sie teilweise in der festen Matrix enthalten sind.

3. Selbstständige mobile Detektionsvorrichtung (1) nach Anspruch 2, wobei die feste Matrix in eine starre Hülle (2) geformt ist, die einen inneren Hohlraum (4a) definiert, wobei die starre Hülle (2) mindestens ein Loch (3) umfasst, das in der Lage ist, den inneren Hohlraum (4a) in Fluidverbindung mit der äußeren Umgebung (4b) zu bringen, und wobei der innere Hohlraum (4a) den Sensor (5), der in der Lage ist, chemisch-physikalische Parameter zu detektieren, und die Einheit (6) zur drahtlosen Datenübertragung umfasst.

4. Selbstständige mobile Detektionsvorrichtung (1) nach Anspruch 3, wobei die starre Hülle (2) Mittel zum Schließen des mindestens einen Lochs (3) umfasst.

5. Selbstständige mobile Detektionsvorrichtung (1) nach Anspruch 3, wobei die starre Hülle (2) aus porösem Material hergestellt ist.

6. Selbstständige mobile Detektionsvorrichtung (1) nach einem der vorangehenden Ansprüche, wobei der integrierte Chip ein Chip für die Informationsübertragung mittels RF, d.h. Radiofrequenz, vorzugsweise mittels NFC-Technologie, ist.

7. System (10; 210) für die Detektion und die Überwachung von chemisch-physikalischen Parametern und für die Informationsübertragung, umfassend
- eine Vielzahl von selbständigen mobilen Detektionsvorrichtungen (1a-1e; 101a-101e) nach einem der vorangehenden Ansprüche;
- eine Kontrolleinheit (11; 211), die in der Lage ist, Informationen von/zu der Vielzahl von selbständigen mobilen Detektionsvorrichtungen (1a-1e; 101a-101e) zu empfangen und/oder zu senden, wobei die Kontrolleinheit (11; 211) vorzugsweise mit einem Datenprozessor und/oder mit einer Einheit zur Speicherung von Daten, die die Interaktion mit einem menschlichen Bediener ermöglicht, in Verbindung steht; und
- einen Transponder (12; 212), der in der Lage ist, ein Signal von und zu der Vielzahl von selbständigen mobilen Detektionsvorrichtungen (1a-1e; 101a-101e) zu empfangen und zu senden, und der in der Lage ist, das Signal an die Kontrolleinheit (11; 211) erneut zu senden und zu empfangen,
wobei die Kontrolleinheit (11; 211) einen GPS-Empfänger zur Georeferenzierung von Informationsteilen umfasst, die von der Kontrolleinheit (11; 211) nach außerhalb des Systems übertragen werden, um eine vollständige Verfolgung der Vielzahl von selbständigen mobilen Detektionsvorrichtungen (1a-1e; 101a-101e) zu ermöglichen.

8. Verfahren zur Detektion und zum Überwachen von chemisch-physikalischen Parametern, welches die folgenden Schritte umfasst:
a) Bereitstellen eines festen Materials in Form eines Pulvers und/oder eines granularen Materials, wobei das feste Material dazu bestimmt ist, in der Landwirtschafts-, Lebensmittel- und Viehzuchtindustrie verwendet zu werden, und das in einem Behälter (30; 230) gelagert wird, der zur Aufbewahrung und/oder zum Transport des festen Materials geeignet ist, und eines Systems (10; 210) nach Anspruch 7;
b) Verteilen einer Vielzahl von selbständigen mobilen Detektionsvorrichtungen (1a-1e; 101a-101e), die in dem System (10; 210) enthalten sind, in dem festen Material;
c) Detektieren und Erfassen, mittels der Vielzahl von selbständigen mobilen Detektionsvorrichtungen (1a-1e; 101a-101e), die in dem festen Material versenkt sind, von Informationsteilen, die sich auf chemisch-physikalische Parameter beziehen, die aus der Gruppe ausgewählt sind, die aus der Konzentration von flüchtigen organischen Verbindungen in der Luft, der Konzentration von Kohlendioxid in der Luft und der Konzentration von molekularem Sauerstoff in der Luft besteht, wobei die Erfassung der chemisch-physikalischen Parameter durchgeführt wird,
d) Senden der so detektierten und erfassten Informationsteile von den selbständigen mobilen Detektionsvorrichtungen (1a-1e; 101a-101e) an die Kontrolleinheit (11; 211), Durchführung der Überwachung der chemisch-physikalischen Parameter; und
Verfolgen der Vielzahl von selbständigen mobilen Detektionsvorrichtungen (1a-1e; 101a-101e) unter Verwendung der Kontrolleinheit (11; 211), die den GPS-Empfänger für die Georeferenzierung von Informationsteilen umfasst, die von der Kontrolleinheit (11; 211) nach außerhalb des Systems übertragen werden.

9. Verfahren nach Anspruch 8, umfassend die folgenden weiteren Schritte:
e) Bereitstellen von voreingestellten Parametern, die sich auf chemisch-physikalische Eigenschaften beziehen, mittels der Kontrolleinheit (11; 211), wobei die voreingestellten Parameter einen Wert in einem Bereich zwischen einem voreingestellten Minimalwert und einem voreingestellten Maximalwert haben;
f) Ausführen einer Verarbeitungsoperation mittels der Kontrolleinheit, wobei die erfassten Informationsteile, die sich auf chemisch-physikalische Parameter beziehen, mit den voreingestellten Parametern, die sich auf die gleiche chemisch-physikalische Eigenschaft beziehen, verglichen werden, Ausführen einer Kontrolle der detektierten, erfassten und überwachten chemisch-physikalischen Parameter.

10. Verfahren nach Anspruch 8 oder 9, umfassend die folgenden Schritte:
a) Bereitstellen eines Feststoffs in Form eines Pulvers und/oder eines granularen Materials, das in einem für die Aufbewahrung und/oder den Transport des Feststoffs geeigneten Behälter (230) aufbewahrt wird, und eines Systems (210), das den GPS-Empfänger zur Georeferenzierung von Informationsteilen umfasst, die von der Kontrolleinheit nach außerhalb des Systems übertragen werden;
b) Dispergieren einer Vielzahl von selbständigen mobilen Detektionsvorrichtungen (101a-101e), die von dem System (210) umfasst werden, in dem Feststoff;
c) Detektieren und Erfassen eines Radiofrequenzsignals mittels der Vielzahl von selbständigen mobilen Detektionsvorrichtungen (101a-101e), die in dem festen Material dispergiert sind, wobei das Radiofrequenzsignal zuvor von dem Transponder (212) zu der Vielzahl von selbständigen mobilen Detektionsvorrichtungen (101a-101e) gesendet wird, die in dem System (210) enthalten und in dem festen Material dispergiert sind, ,Durchführen der Detektion und Erfassung der chemisch-physikalischen Parameter;
d) Senden von der Vielzahl selbständiger mobiler Detektionsvorrichtungen (101a-101e), die in dem festen Material verteilt sind, an den Transponder (212) von Informationsteilen, die sich auf die so detektierten und erfassten chemisch-physikalischen Parameter beziehen, und sukzessives Senden der Informationsteile, die sich auf die chemisch-physikalischen Parameter beziehen, mittels des Transponders (212) an eine Kontrolleinheit (211), Durchführung der Überwachung der chemisch-physikalischen Parameter.

11. Verfahren nach Anspruch 10, wobei in dem Schritt a) des Bereitstellens eines Feststoffs in Form eines Pulvers und/oder eines granularen Materials und eines Systems (210) und in dem Schritt b) des Dispergieren einer Vielzahl von selbständigen mobilen Detektionsvorrichtungen (101a-101e), die in dem System (210) enthalten sind, in dem Feststoff, der Behälter (230) ein Kipper eines Mähdreschers ist und der integrierte Chip, der in der Vielzahl von selbständigen mobilen Detektionsvorrichtungen (101a-101e) enthalten ist, einen eindeutigen Identifikationscode der selbständigen mobilen Detektionsvorrichtung und einen eindeutigen Identifikationscode des Mähdreschers, in den die selbständige mobile Detektionsvorrichtung eingebracht wird, kodiert, vorzugsweise erfolgt in dem Schritt b) die Dispersion der Vielzahl von selbständigen mobilen Detektionsvorrichtungen (101a-101e) direkt in dem Mähdrescher mittels eines geeigneten automatischen Verteilungssystems, wobei das automatische Verteilungssystem so programmiert ist, dass es in dem Kipper des Mähdreschers eine der Vielzahl von selbständigen mobilen Detektionsvorrichtungen (101a-101e) für jede spezifische Menge an Gewicht oder Volumen des Erntematerials bereitstellt.

12. Verfahren nach Anspruch 10 oder 11, das einen weiteren Schritt umfasst, bei dem von der Kontrolleinheit (211) georeferenzierte Informationsteile, die sich auf die so überwachten chemisch-physikalischen Parameter beziehen, an einen Datenprozessor und/oder an eine Einheit zur Speicherung von Daten gesendet werden, wobei sich der Datenprozessor und/oder die Einheit zur Speicherung von Daten außerhalb des Systems (210) befinden und die Interaktion mit einem menschlichen Bediener ermöglichen.

13. Verfahren nach einem der Ansprüche 8-12, wobei das feste Material in Form eines Pulvers und/oder eines granularen Materials aus Getreide besteht, und wobei die Vielzahl von selbständigen mobilen Detektionsvorrichtungen von dem festen Material, in dem es dispergiert ist, während eines Prozesses der Vorreinigung oder Reinigung eines solchen Getreides, vorzugsweise mit Hilfe von Reinigungsmaschinen, getrennt wird.

14. Verfahren nach einem der Ansprüche 8-13, wobei das feste Material ausgewählt ist aus der Gruppe bestehend aus Getreide, Früchten, Gewürzen, Kaffeebohnen, Tierfutter in Pellets, granuliertem Tierfutter, Getreideschrot und/oder Hülsenfruchtschrot.

## Revendications

1. Dispositif de détection mobile autonome (1 ; 101) pour la détection de paramètres physico-chimiques à l'intérieur d'un contenant pour le stockage de matières premières solides destinées à être utilisées dans l'industrie agricole, alimentaire et du bétail sous la forme d'une poudre et/ou de granules, dans lesquelles il est immergé, et pour l'émission d'informations, ledit dispositif étant apte à être transporté d'une manière passive par le mouvement d'un écoulement desdites matières solides, ledit dispositif comprenant au moins un élément de détection (5 ; 105) apte à détecter des paramètres physico-chimiques, au moins une unité (6 ; 106) pour l'émission sans fil d'informations se rapportant auxdits paramètres physico-chimiques et une matrice solide constituée de matière plastique, ledit au moins un élément de détection (5 ; 105) apte à détecter des paramètres physico-chimiques et ladite au moins une unité (6 ; 106) pour l'émission sans fil d'informations étant au moins partiellement incorporés dans ladite matrice solide et étant en communication avec l'environnement externe, ledit dispositif de détection mobile autonome (1 ; 101) comprenant en outre une puce intégrée pour l'émission d'informations au moyen d'une technologie de connectivité en mode sans fil bidirectionnel avec une courte/moyenne portée,
dans lequel ledit au moins un élément de détection (5) est un capteur approprié pour la mesure d'un paramètre physico-chimique sélectionné parmi le groupe constitué de la concentration en composés organiques volatils dans l'air, la concentration en dioxyde de carbone dans l'air et la concentration en oxygène moléculaire dans l'air, et
dans lequel le dispositif de détection mobile autonome (1 ; 101) comprend en outre un récepteur de système mondial de positionnement, GPS, et une batterie (7) .

2. Dispositif de détection mobile autonome (1) selon la revendication 1, dans lequel ladite matrice solide est une phase continue et dans lequel ledit au moins un élément de détection (5) apte à détecter des paramètres physico-chimiques et ladite au moins une unité (6) pour l'émission sans fil d'informations sont complètement ou partiellement incorporés dans ladite matrice solide, ledit au moins un élément de détection (5) apte à détecter des paramètres physico-chimiques et ladite au moins une unité (6) pour l'émission sans fil d'informations étant indirectement en communication avec l'environnement externe, lorsqu'ils sont complètement incorporés dans ladite matrice solide, ou directement, lorsqu'ils sont partiellement incorporés dans ladite matrice solide.

3. Dispositif de détection mobile autonome (1) selon la revendication 2, dans lequel ladite matrice solide se présente sous la forme d'une coque rigide (2) définissant une cavité interne (4a), dans lequel ladite coque rigide (2) comprend au moins un trou (3) apte à mettre en communication fluidique ladite cavité interne (4a) avec ledit environnement externe (4b) et dans lequel ladite cavité interne (4a) comprend ledit capteur (5) apte à détecter des paramètres physico-chimiques et ladite unité (6) pour l'émission sans fil de données.

4. Dispositif de détection mobile autonome (1) selon la revendication 3, dans lequel ladite coque rigide (2) comprend des moyens pour la fermeture dudit au moins un trou (3).

5. Dispositif de détection mobile autonome (1) selon la revendication 3, dans lequel ladite coque rigide (2) est constituée de matière poreuse.

6. Dispositif de détection mobile autonome (1) selon l'une quelconque des revendications précédentes, dans lequel ladite puce intégrée est une puce pour l'émission d'informations au moyen d'une RF, c'est-à-dire d'une radiofréquence, de préférence au moyen d'une technologie de communication en champ proche, NFC.

7. Système (10 ; 210) pour la détection et la surveillance de paramètres physico-chimiques et pour l'émission d'informations comprenant
- une pluralité de dispositifs de détection mobiles autonomes (la à le ; 101a à 101e) selon l'une quelconque des revendications précédentes ;
- une unité de commande (11 ; 211) apte à recevoir et/ou envoyer des informations à partir de/vers ladite pluralité de dispositifs de détection mobiles autonomes (1a à 1e ; 101a à 101e), de préférence ladite unité de commande (11 ; 211) étant en communication avec un processeur de données et/ou avec une unité pour le stockage de données qui permet l'interaction avec un opérateur humain ; et,
- un transpondeur (12 ; 212) apte à recevoir et émettre un signal à partir de et vers ladite pluralité de dispositifs de détection mobiles autonomes (la à le ; 101a à 101e) et apte à émettre à nouveau et à recevoir ledit signal vers ladite unité de commande (11 ; 211),
ladite unité de commande (11 ; 211) comprenant un récepteur GPS pour le géoréférencement de fragments d'informations qui sont émis de ladite unité de commande (11 ; 211) vers l'extérieur dudit système, afin de permettre un suivi complet de ladite pluralité de dispositifs de détection mobiles autonomes (la à le ; 101a à 101e).

8. Procédé pour la détection et la surveillance de paramètres physico-chimiques qui comprend les étapes suivantes :
a) la fourniture d'une matière solide sous la forme d'une poudre et/ou d'une matière granulaire, dans lequel ladite matière solide est destinée à être utilisée dans l'industrie agricole, alimentaire et du bétail, qui est stockée dans un contenant (30 ; 230) approprié pour la conservation et/ou pour le transport de ladite matière solide et un système (10 ; 210) selon la revendication 7 ;
b) la dispersion d'une pluralité de dispositifs de détection mobiles autonomes (1a à 1e ; 101a à 101e) compris dans ledit système (10 ; 210) dans ladite matière solide ;
c) la détection et l'acquisition, au moyen de ladite pluralité de dispositifs de détection mobiles autonomes (1a à 1e ; 101a à 101e) dispersés dans ladite matière solide, de fragments d'informations se rapportant à des paramètres physico-chimiques sélectionnés parmi le groupe constitué de la concentration en composés organiques volatils dans l'air, la concentration en dioxyde de carbone dans l'air et la concentration en oxygène moléculaire dans l'air, ce qui permet de réaliser ladite détection desdits paramètres physico-chimiques,
d) l'envoi, desdits dispositifs de détection mobiles autonomes (1a à 1e ; 101a à 101e) à ladite unité de commande (11 ; 211), desdits fragments d'informations ainsi détectés et acquis, ce qui permet de réaliser ladite surveillance desdits paramètres physico-chimiques ; et
le suivi de ladite pluralité de dispositifs de détection mobiles autonomes (1a à 1e ; 101a à 101e) à l'aide de ladite unité de commande (11 ; 211) comprenant le récepteur GPS pour le géoréférencement de fragments d'informations qui sont émis de ladite unité de commande (11 , 211) vers l'extérieur dudit système.

9. Procédé selon la revendication 8 comprenant les étapes supplémentaires suivantes :
e) la fourniture, au moyen de ladite unité de commande (11 ; 211), de paramètres prédéfinis se rapportant à des propriétés physico-chimiques, dans lequel lesdits paramètres prédéfinis possèdent une valeur dans une plage entre une valeur minimale prédéfinie et une valeur maximale prédéfinie ;
f) la mise en œuvre, au moyen de ladite unité de commande, d'une opération de traitement, dans lequel lesdits fragments d'informations acquis se rapportant à des paramètres physico-chimiques sont comparés avec lesdits paramètres prédéfinis se rapportant à la même propriété physico-chimique, ce qui permet de réaliser une commande desdits paramètres physico-chimiques détectés, acquis et surveillés.

10. Procédé selon la revendication 8 ou 9 comprenant les étapes suivantes :
a) la fourniture d'un solide sous la forme d'une poudre et/ou d'une matière granulaire qui est stockée dans un contenant (230) approprié pour la conservation et/ou pour le transport de ladite matière solide et d'un système (210) comprenant ledit récepteur GPS pour le géoréférencement de fragments d'informations qui sont émis de ladite unité de commande vers l'extérieur dudit système ;
b) la dispersion, dans ladite matière solide, d'une pluralité de dispositifs de détection mobiles autonomes (101a à 101e) compris dans ledit système (210) ;
c) la détection et l'acquisition, au moyen de ladite pluralité de dispositifs de détection mobiles autonomes (101a à 101e) dispersés dans ladite matière solide, d'un signal radiofréquence, ledit signal radiofréquence étant auparavant envoyé dudit transpondeur (212) vers ladite pluralité de dispositifs de détection mobiles autonomes (101a - 101e) compris dans ledit système (210) et dispersés dans ladite matière solide, ce qui permet de réaliser lesdites détection et acquisition desdits paramètres physico-chimiques ;
d) l'envoi, de ladite pluralité de dispositifs de détection mobiles autonomes (101a à 101e) dispersés dans ladite matière solide audit transpondeur (212), de fragments d'informations se rapportant à des paramètres physico-chimiques ainsi détectés et acquis et, successivement, l'envoi, au moyen dudit transpondeur (212) à une unité de commande (211), desdits fragments d'informations se rapportant à des paramètres physico-chimiques, ce qui permet de réaliser ladite surveillance de paramètres physico-chimiques.

11. Procédé selon la revendication 10, dans lequel dans ladite étape a) de fourniture d'un solide sous la forme d'une poudre et/ou d'une matière granulaire et d'un système (210) et dans ladite étape b) de dispersion, dans ladite matière solide, d'une pluralité de dispositifs de détection mobiles autonomes (101a à 101e) compris dans ledit système (210), ledit contenant (230) est une benne d'une moissonneuse-batteuse et ladite puce intégrée comprise dans ladite pluralité de dispositifs de détection mobiles autonomes (101a à 101e) code un code d'identification univoque dudit dispositif de détection mobile autonome et un code d'identification univoque de ladite moissonneuse-batteuse dans laquelle ledit dispositif de détection mobile autonome est introduit, de préférence, dans ladite étape b), la dispersion de ladite pluralité de dispositifs de détection mobiles autonomes (101a à 101e) a lieu directement dans ladite moissonneuse-batteuse au moyen d'un système approprié de distribution automatique, ledit système de distribution automatique étant programmé pour fournir, dans ladite benne de la moissonneuse-batteuse l'un de ladite pluralité de dispositifs de détection mobiles autonomes (101a à 101e) pour chaque quantité spécifique en poids ou en volume de matière récoltée.

12. Procédé selon la revendication 10 ou 11, comprenant une étape supplémentaire d'envoi, de ladite unité de commande (211) à un processeur de données et/ou à une unité pour le stockage de données, de fragments d'informations géoréférencés se rapportant auxdits paramètres physico-chimiques ainsi surveillés, dans lequel ledit processeur de données et/ou ladite unité pour le stockage de données sont à l'extérieur dudit système (210) et permettent l'interaction avec un opérateur humain.

13. Procédé selon l'une quelconque des revendications 8 à 12, dans lequel ladite matière solide sous la forme d'une poudre et/ou d'une matière granulaire est constituée de grain, et dans lequel ladite pluralité de dispositifs de détection mobiles autonomes est séparée de ladite matière solide dans laquelle elle est dispersée pendant un procédé de pré-nettoyage ou de nettoyage de ce grain, de préférence au moyen de machines de nettoyage.

14. Procédé selon l'une quelconque des revendications 8 à 13, dans lequel ladite matière solide est sélectionnée parmi le groupe constitué du grain, des fruits, des épices, des grains de café, des aliments pour animaux en croquettes, des aliments granulaires pour animaux, de la farine de céréales et/ou de la farine de légumineuses.
